# NOUVEAU FASCICULE DE BREVET EUROPEEN

(11) **EP 2 440 482 B2**
(45) Date de publication et mention de la décision concernant l'opposition: **31.05.2023**
(45) Mention de la délivrance du brevet: 30.07.2014
(21) Numéro de dépôt: 10737987.7
(22) Date de dépôt: 10.06.2010
(51) Int. Cl.: B65G 21/16, B65G 21/20

(54) **DISPOSITIF DE REGLAGE DE LARGEUR POUR COULOIR(S) DE CONVOYEUR**
BREITENEINSTELLUNGSVORRICHTUNG FÜR FÖRDERGÄNGE
WIDTH-ADJUSTING DEVICE FOR CONVEYOR CORRIDOR(S)

(30) Priorité: 11.06.2009 FR 0953871; 11.06.2009 WO PCT/FR2009/051097; 12.05.2010 FR 1053753
(43) Date de publication de la demande: 18.04.2012
(73) Titulaire: Gebo Packaging Solutions France, 67116 Reichstett (FR)
(72) Inventeur: BERGER, Julien, F-76930 Octeville-sur-Mer (FR); PERREARD, Brice, F-76930 Octeville-sur-Mer (FR); PERRIN, David, F-76930 Octeville-sur-Mer (FR)
(74) Mandataire: Sidel Group
(86) Numéro de dépôt international: PCT/FR2010/051160
(87) Numéro de publication internationale: WO 2010/142919

(56) Documents cités:
- EP-A1- 1 159 209
- EP-A2- 0 806 378
- WO-A1-00/17073
- WO-A1-2009/150379
- WO-A1-2009/150379
- CA-A1- 2 090 824
- DE-A1- 4 106 425
- DE-A1- 19 610 936
- DE-U1- 20 208 127
- DE-U1- 29 617 148
- FR-A1- 2 932 466
- JP-A- H0 464 299
- US-A- 894 307
- US-A- 4 880 104
- US-A- 4 986 056
- US-A- 5 820 464
- US-A- 6 059 096
- US-B1- 6 452 293
- US-B1- 6 974 386
- Fachbuch: Ernst Widmer, "Das Berechen von Zahnrädern und Getriebe Verzahnungen", Birkhäuser Verlag. ISBN 3-7643-1276-9, 1981
- Facbbuch: A.K. Thomas, "Die Tragfähigkeit der Zahnräder", Carl Hanser Verlag München, Dritte Auflage, 1957
- Fachbuch: Roloff/Matek, "Maschinenelemente", Vieweg Verlag, ISBN 3-528-94028-X, 15.Auflage, 2001

## Description

La présente invention se rapporte au domaine technique général du convoyage et notamment au domaine des convoyeurs de bouteilles, de packs ou d'autres objets.

La présente invention concerne plus particulièrement un dispositif qui permet de piloter le positionnement d'un ou de plusieurs organes servant au guidage des objets qui sont pris en charge par le convoyeur, un dispositif de réglage de largeur pour couloir(s) de convoyeur selon le préambule de la revendication 1, et un procédé de montage du dispositif de réglage de largeur pour couloir(s).

La présente invention concerne tous types de convoyeurs, qu'il s'agisse d'un convoyeur à tapis sans fin, unifilaire ou multi-couloirs, d'un convoyeur à air pour des bouteilles guidées sous col ; elle concerne le réglage de la position de la ou des parois ou rails de guidage du ou des couloirs de convoyage pour adapter cette largeur à la dimension du corps des bouteilles, des packs ou autres.

Des moyens de réglage d'écartement des parois des couloirs sont connus sur les convoyeurs à tapis sans fin sur lequel repose des objets.

Le document US 5 211 280 montre un dispositif de réglage de la largeur d'un couloir de convoyeur. Ce dispositif comprend des guides qui définissent la largeur du couloir, lesquels guides sont portés par des crémaillères, régulièrement réparties, lesquelles crémaillères sont manoeuvrées par des pignons qui sont reliés entre eux par des arbres avec joints de cardan.

A l'extrémité de l'arbre, une roue, ou volant, de manoeuvre, permet de régler en un seul mouvement, la position du guide faisant office de paroi pour le couloir, en fonction de la dimension des produits et, en particulier, des bouteilles à convoyer.

Un dispositif similaire est également présenté dans le document US 6 778 695, au titre de l'état de la technique. Dans ce document, l'arbre qui permet de manoeuvrer simultanément l'ensemble des crémaillères portant les parois des couloirs, ressemble à un arbre flexible.

Ces différents dispositifs, avec pignons et crémaillères, n'offrent pas une grande précision pour le réglage de la position des guides.

D'autres dispositifs, comme décrits dans le document US 6 209 707, offrent une plus grande précision au moyen d'un système de réglage qui comprend des vis pour manoeuvrer les différents guides ou parois, lesquelles vis comportent des pas différents et elles sont attachées chacune à des couples de guides ou de parois, pour régler la largeur de chaque couloir.

Comme dans les documents précités, ce dispositif n'offre pas, directement au niveau de la commande du réglage, une grande précision, et, surtout, ces différents dispositifs n'offrent pas un caractère intrinsèque d'irréversibilité, c'est-à-dire qu'il faut, notamment pour les deux premiers dispositifs décrits dans les documents cités, des moyens complémentaires qui verrouillent la position des crémaillères pour éviter tout mouvement et surtout le déréglage de la largeur des couloirs.

L'utilisation d'actionneurs pneumatiques, comme décrit dans le document US 6 305 528 pour réaliser le réglage des parois de guidage est une solution technique dont la fiabilité et la précision peuvent être altérées par des fuites et/ou des variations de débit, compte-tenu de la longueur des canalisations.

Le document EP 1 159 209 présente un rail de guidage ajustable pour transporter des produits, un dispositif de réglage de largeur pour couloir(s) de convoyeur selon le préambule de la revendication 1, et un procédé de montage du dispositif de réglage de largeur pour couloir(s).

Le but de la présente invention vise par conséquent à s'affranchir des limitations mentionnées ci-dessus en améliorant la fiabilité et la précision des moyens de réglage.

Un objet de la présente invention vise ainsi à fournir un dispositif de réglage simplifié dans sa conception tout en n'altérant pas sa fiabilité et surtout la précision de réglage.

Un objet de la présente invention vise ainsi à fournir un nouveau module de commande et de réglage dont le coût est substantiellement diminué par rapport aux moyens de réglage classiques.

La présente invention a également pour objet de proposer un procédé de montage qui offre une précision inégalée en matière de positionnement initial des organes de guidage lors de l'installation dudit dispositif sur un convoyeur.

Les objets assignés à l'invention sont atteints à l'aide du dispositif de réglage selon la revendication 1 dont le principal avantage réside dans la polyvalence de son utilisation. Il peut en effet être monté sur différents types de convoyeurs.

Un autre avantage du dispositif de réglage conforme à l'invention réside dans sa grande simplicité de mise en oeuvre et dans une minimisation des risques de pannes.

Un autre avantage du dispositif de réglage conforme à l'invention réside dans un fonctionnement ne nécessitant l'utilisation ni de moyens hydrauliques ou pneumatiques, ni de moyens de lubrification.

Un autre avantage du dispositif et de réglage conforme à l'invention réside dans une réduction significative des câblages.

Le dispositif de réglage de largeur pour couloir(s) de convoyeur selon l'invention comporte un mécanisme à grande démultiplication solidaire du châssis dudit convoyeur, lequel mécanisme est disposé entre l'arbre de commande et la ou les parois dudit couloir et il comprend :
- un couple réducteur à fonctionnement irréversible constitué - dudit arbre de commande, en forme de vis sans fin, et - d'une roue dentée,
- un système de manoeuvre de l'une au moins des parois dudit couloir, constitué d'une vis sans fin et d'un écrou, laquelle vis sans fin étant mobile ou fixe par rapport à ladite roue dentée.

Toujours selon l'invention, le couple réducteur du dispositif de réglage fonctionne avec un rapport de l'ordre 1/40.

Selon une autre disposition de l'invention, l'arbre du couple réducteur est un arbre flexible du type de ceux utilisés dans les mécanismes des lève-vitres de véhicules automobiles, lequel arbre flexible comprend une âme centrale dont le diamètre est de l'ordre de 4 mm sur laquelle est enroulée un fil métallique du genre corde à piano dont le diamètre est de l'ordre de 2 mm, ledit fil étant immobilisé sur ladite âme par enroulement serré avec un pas qui est de l'ordre de 4 mm.

Toujours selon l'invention, le dispositif de réglage comporte, dans le cas d'un arbre flexible de grande longueur, au moins un système de maintien en tension dudit arbre flexible, lequel système de maintien est disposé entre une extrémité dudit arbre et le châssis du convoyeur, pour absorber les efforts de traction et de poussée exercés sur ledit arbre selon le sens de rotation.

Selon une autre disposition de l'invention, le système de maintien en tension du dispositif de réglage comprend une butée du type butée à billes interposée entre un embout solidaire d'une extrémité de l'arbre flexible et un épaulement, lequel épaulement est aménagé sur un tube qui est mobile par rapport au châssis du convoyeur et qui est maintenu en position au moyen d'un organe élastique du genre ressort précontraint, de manière à présenter, en l'absence d'efforts exercés sur ledit arbre flexible, une course de compression et une course d'élongation.

Toujours selon l'invention, l'arbre flexible du dispositif de réglage est manoeuvré par un organe moteur et ledit dispositif de réglage comprend des moyens de commande pour enregistrer une consigne de réglage de la largeur du ou des couloirs, et pour actionner ledit moteur en fonction de ladite consigne de réglage.

Selon une autre disposition de l'invention, le moteur d'actionnement du mécanisme de manoeuvre est positionné à mi-longueur d'un arbre flexible ou entre deux arbres flexibles de grande longueur, l'extrémité libre de chacun du ou des arbres flexibles étant fixée à un système de maintien en tension.

Toujours selon l'invention, le couple constitué de l'arbre flexible et de la roue dentée coopère dans un boitier de transmission et, entre deux boitiers consécutifs, ledit arbre flexible est logé dans un fourreau de guidage et de protection, ledit fourreau présentant des extrémités engagées dans et/ou fixées sur les boîtiers de transmission correspondants.

Selon une autre disposition de l'invention, le boîtier de transmission est constitué de deux demi-coques réalisées en matériau du type acétal, lequel boitier comporte :
- ces deux demi-coques usinées et destinées à être fixées sur le châssis du convoyeur,
- un logement sensiblement cylindrique délimité par les demi-coques lorsqu'elles sont assemblées, lequel logement est occupé par la roue dentée,
- un passage calibré pour l'arbre flexible, lequel passage est aménagé dans chaque demi-coque, ledit passage calibré étant positionné orthogonalement par rapport à l'axe dudit logement et de manière à tangenter ledit logement pour permettre le fonctionnement du couple arbre flexible et roue dentée, et, selon le cas,
- lesdites demi-coques comportent des saillies cylindriques pour guider et recouvrir le filetage de la tige filetée de manoeuvre de la ou des parois du ou des couloirs.

L'invention concerne aussi un procédé de montage du dispositif de réglage de largeur pour couloir(s) selon la revendication 10.

Dans le cas d'un dispositif de réglage dont la roue dentée fait office d'écrou pour la vis de manoeuvre de la paroi correspondante, le procédé consiste aussi, après avoir disposé le couple réducteur dans la demi-coque, à positionner ladite vis de manoeuvre dans une position préétablie, au moyen d'une butée ou, par exemple, d'une face de référence comme celle qui se situe à l'extrémité de la saillie de la demi-coque externe.

L'invention concerne encore un dispositif de réglage de largeur pour couloir(s) de convoyeur, selon la revendication 1, comportant un module de tension associé à un arbre flexible de grande longueur en forme de vis sans fin, de l'ordre de 10 mètres au moins, ledit arbre flexible étant entraîné, à l'une de ses extrémités, par un organe moteur pour manoeuvrer des roues dentées qui actionnent des organes de réglage de l'une, ou plusieurs, des parois de couloir(s) de convoyeur, par exemple, lequel module de tension est aménagé à l'extrémité libre dudit arbre flexible pour absorber les efforts de réaction dans ledit arbre afin d'éliminer, à tout le moins de réduire, les dérives angulaires au niveau de l'entraînement desdites roues d'actionnement, lequel module comprend un système de maintien en tension constitué d'une butée du type à billes interposée entre un embout solidaire de ladite extrémité libre dudit arbre flexible et un épaulement, lequel épaulement est aménagé sur un tube qui est centré sur ledit arbre flexible et il est mobile par rapport au châssis dudit convoyeur tout en étant maintenu en position au moyen d'un organe élastique du genre ressort précontraint, de manière à présenter, en l'absence d'efforts exercés sur ledit arbre flexible, une course de compression et une course d'élongation.

L'invention et ses avantages apparaîtront avec plus de détails dans le cadre de la description qui suit avec des exemples de réalisation donnés à titre illustratif et non limitatif, en référence aux figures annexées dans lesquelles :
- la figure 1 est une élévation schématique sous forme de deux demi-coupes transversales selon AA et BB de la figure 3, d'un exemple de convoyeur comportant plusieurs tapis sans fin, capable d'accepter des bouteilles de tailles différentes dans ses multiples couloirs de guidage unifilaires,
- la figure 2 est une vue schématique partielle en perspective, montrant les différents éléments constitutifs du dispositif de réglage selon l'invention pour le cas d'un convoyeur du type multi-couloirs,
- la figure 3 est une vue partielle, en plan, d'un convoyeur multi-couloirs qui utilise, de place en place, le dispositif de réglage selon l'invention pour ajuster, selon les besoins, la largeur de ses différents couloirs,
- la figure 4 est une vue agrandie d'un détail du dispositif de réglage conforme à l'invention et plus précisément d'un exemple de réalisation d'un moyen de maintien en tension de l'arbre flexible dudit dispositif,
- la figure 5 est une vue en coupe selon 5-5 de la figure 4,
- la figure 6 représente une variante de réalisation de l'application du dispositif de réglage, lequel dispositif de réglage est installé à la partie supérieure d'un convoyeur et les parois des différents couloirs de ce convoyeur sont suspendues,
- la figure 7 est une élévation en coupe transversale d'un autre type de convoyeur utilisé pour des objets du genre packs, lequel convoyeur comporte des dispositifs de réglage conformes à l'invention pour former, selon les nécessités, un, deux ou trois couloirs,
- la figure 8 est une vue partielle en coupe montrant une autre version du dispositif de réglage représenté figure 2, lequel dispositif de réglage est appliqué, sur cette figure 8, à un convoyeur courbe,
- la figure 9 montre une portion d'un convoyeur courbe du type multi-couloirs qui est équipé latéralement, sur son pourtour extérieur, du dispositif de réglage selon l'invention, par arbre flexible,
- la figure 10 est une élévation, en coupe transversale, d'un convoyeur du type à air comprimé pour des bouteilles convoyées par guides sous col, lequel convoyeur comporte également des guides, ou parois, qui se situent au niveau du corps desdites bouteilles, lesquels guide-corps sont chacun manipulés par un dispositif de réglage selon l'invention, pour adapter la largeur du couloir au diamètre des corps desdites bouteilles,
- la figure 11 montre, d'une façon plus détaillée et en coupe transversale, un boîtier installé sur une des descentes de pont du convoyeur à air comprimé, lequel boîtier contient le couple réducteur constitué de l'arbre flexible et de la roue dentée, laquelle roue dentée fait office d'écrou de manoeuvre pour la vis qui est solidaire du guide-corps,
- la figure 12 est une vue de côté de la figure 10, montrant, notamment, l'implantation d'un boîtier du dispositif de réglage selon l'invention, sur une descente de pont du convoyeur à air comprimé,
- la figure 13 montre la face interne d'une demi-coque avec, représentés partiellement, l'arbre flexible et les fourreaux qui habillent, de chaque côté dudit boîtier, les tronçons de l'arbre flexible.

Les éléments structurellement et fonctionnellement identiques, présents dans plusieurs figures distinctes, sont affectés d'une seule et même référence numérique ou alphanumérique.

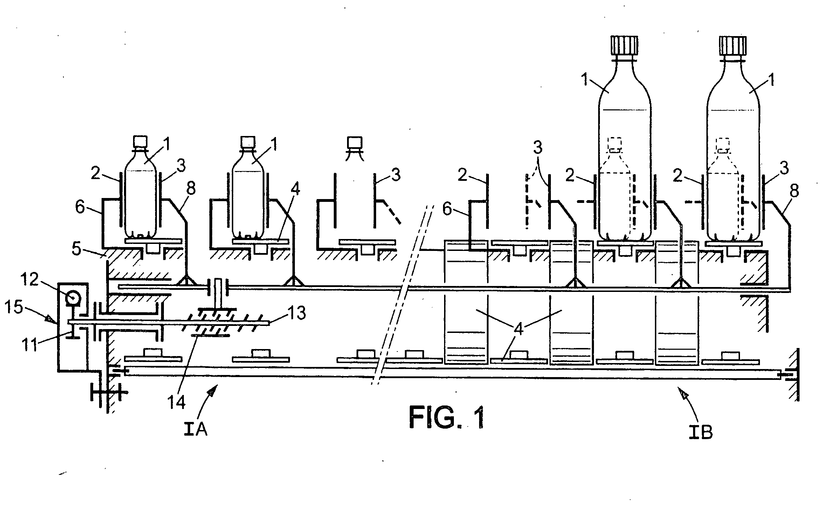

La figure 1 montre une installation conforme à l'invention, conçue pour le convoyage de bouteilles 1, et cette installation comporte plusieurs couloirs rectilignes. La coupe AA de cette figure 1 montre le guidage des bouteilles 1 de petite taille alors que la coupe BB montre le guidage de bouteilles 1 de grande taille.

Chaque couloir comporte deux parois 2 et 3 de guidage, ou rails, lesquelles parois sont disposées en vis-à-vis, au-dessus d'un tapis 4 sans fin.

Dans l'exemple de réalisation de la figure 1, les parois 2 sont fixes et les parois 3 sont mobiles, c'est-à-dire qu'elles sont ajustables au moyen du dispositif de réglage selon l'invention qui est détaillé dans la suite du texte.

Ainsi, l'écartement entre les parois 2 et 3 des couloirs peut être adapté aux différents diamètres de bouteilles 1.

Les parois 2 fixes des différents couloirs sont portées par le châssis 5 du convoyeur au moyen de pattes 6 alors que les parois 3 mobiles sont portées par une structure appropriée détaillée ci-après.

Ces parois 3 sont portées par une structure 7 au moyen de pattes 8 et cette structure 7 est mobile ; elle se présente sous la forme d'une traverse qui est guidée transversalement au moyen d'un système de glissière.

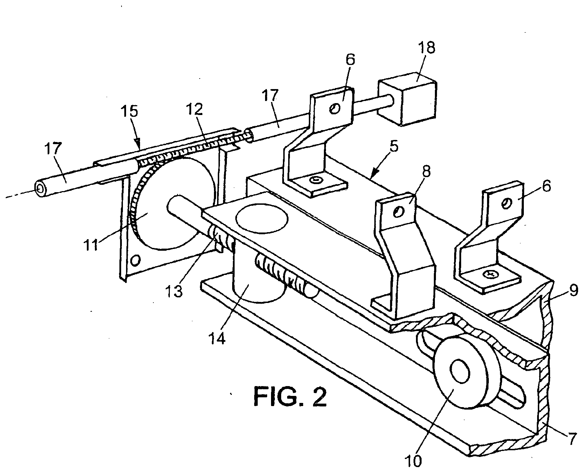

De préférence, comme détaillée figure 2, la structure 7 porteuse se présente sous la forme d'une traverse à section en U et elle est guidée sur une traverse 9 au moyen d'une glissière du type à galets 10, lesquels galets 10 circulent dans le U de ladite structure 7.

La traverse 9 fait partie du châssis 5 et ce sont ces différentes traverses 9 qui portent les parois 2 fixes par l'intermédiaire des pattes 6.

Les parois 2 et 3 comportent, de préférence, comme décrit dans le document FR 2 918 973, deux parties : une âme métallique rigide reliée au châssis 5, directement ou indirectement, et un profilé en matériau thermoplastique qui est en contact avec les produits convoyés, c'est-à-dire les bouteilles 1.

Cette figure 1 montre un aménagement des parois 2 et 3 des couloirs, et du dispositif de réglage de ces parois, qui présente la particularité de laisser libre le dessus de l'installation de convoyage et, par conséquent, d'offrir un accès totalement dégagé pour permettre à un opérateur, par exemple, d'intervenir au niveau des bouteilles 1.

La structure 7 est mobile sous l'effet du dispositif de réglage selon l'invention, lequel dispositif se présente sous la forme d'un mécanisme de manoeuvre qui fonctionne avec une très grande démultiplication. Cette démultiplication comprend deux niveaux de réduction : un premier niveau de réduction constitué d'un couple réducteur comportant une roue 11 dentée et un arbre 12 de commande, en forme de vis sans fin, et un second niveau de réduction qui comprend un système de manoeuvre comportant une vis 13 sans fin et un écrou 14 ; les deux niveaux de démultiplication sont irréversibles, ce qui permet de s'affranchir de tout dispositif complémentaire de freinage et ou de blocage pour éviter un quelconque mouvement des parois 3.

Le couple roue 11-arbre 12 est logé dans un boîtier 15 de transmission qui est solidaire du châssis 5. La roue 11 est solidaire de la vis 13 et cette vis 13 s'étend dans la structure 7 en passant par l'écrou 14. Cet écrou 14 est monté avec du jeu dans les ailes du U qui forment la structure 7.

A titre d'exemple, le couple roue 11-arbre 12 présente un rapport de réduction de l'ordre de 1/40 et le pas de la vis 13 est de l'ordre de 4 mm.

On obtient ainsi une grande facilité de réglage et surtout une grande précision. Le temps de réglage peut être relativement long, de l'ordre d'une minute pour obtenir un déplacement de 4 mm de la paroi 3 mobile. Ce déplacement de la paroi 3 mobile est programmable et n'exige aucune intervention directe de la part d'un opérateur.

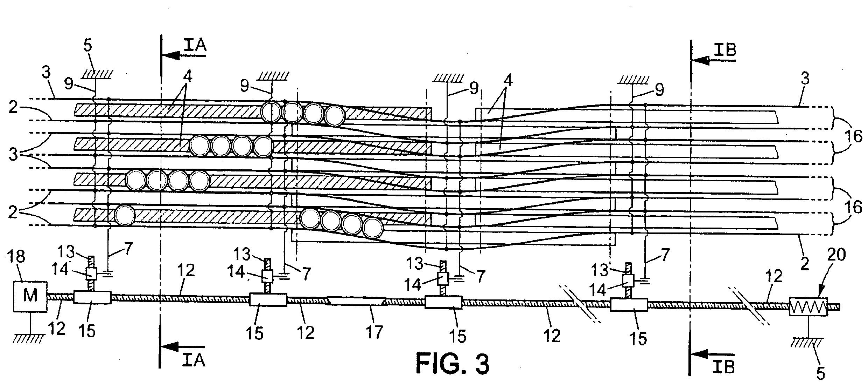

Ce type de mécanisme de manoeuvre se répète régulièrement, comme représenté figure 3, sur la longueur du convoyeur multi-couloirs de façon à assurer, d'une part, le réglage simultané des différentes parois 3 sur toute leur longueur et, d'autre part, une certaine rigidité desdites parois 3 qui constituent l'un des côtés des couloirs 16.

Les différents mécanismes de manoeuvre fonctionnent de façon coordonnée au moyen de l'arbre 12 qui file latéralement le long du convoyeur. L'arbre 12 traverse les boîtiers 15 et chaque roue 11 dentée disposée dans le boîtier correspondant, manoeuvre une vis 13, laquelle vis 13 actionne, par l'intermédiaire d'un écrou 14, la structure 7 porteuse de chaque paroi 3 mobile.

L'arbre 12 est un arbre qui s'apparente à ceux qui sont utilisés dans les mécanismes des lève-vitres de véhicules automobiles, par exemple. Cet arbre 12 est flexible et il comprend une âme centrale sur laquelle est enroulé serré un fil métallique du genre corde à piano.

Dans le cas du dispositif de réglage selon l'invention, le diamètre de l'arbre flexible est de l'ordre de 4 mm et le fil métallique qui est enroulé en spirale a un diamètre qui est de l'ordre de 2 mm, ledit fil métallique étant immobilisé sur ladite âme par enroulement serré avec un pas qui est de l'ordre de 4 mm.

Les portions d'arbre 12 qui s'étendent entre deux boîtiers 15 sont disposées dans un fourreau 17, partiellement représenté sur la figure 3.

Les boîtiers 15 de transmission, qui font office de renvoi d'angle, sont distribués, par exemple, à raison d'un boîtier par mètre, sur toute la longueur du convoyeur.

A titre d'exemple, un arbre 12 du type de celui détaillé auparavant, peut coopérer avec au maximum vingt-cinq boîtiers 15 de transmission. Pour l'exemple de réalisation illustré figure 3, on peut aussi disposer d'un unique moteur 18, de deux arbres 12 et de cinquante boîtiers 15 de transmission selon la longueur du convoyeur lequel convoyeur pouvant être rectiligne ou avec une ou plusieurs portions en courbes.

Le moteur 18 est, par exemple, un moteur électrique du type sans balais avec réducteur et connectique intégrés. Le dispositif de réglage peut comporter également des moyens de commande (non représentés) pour enregistrer une consigne de réglage et pour actionner le moteur 18 en fonction de ladite consigne de réglage.

La rotation de l'arbre 12 flexible, commandée par le moteur 18 s'effectue suivant un sens de rotation ou l'autre, de sorte que la roue 11 peut être entraînée dans un sens ou dans l'autre pour écarter ou rapprocher la paroi 3 mobile de la paroi 2 fixe.

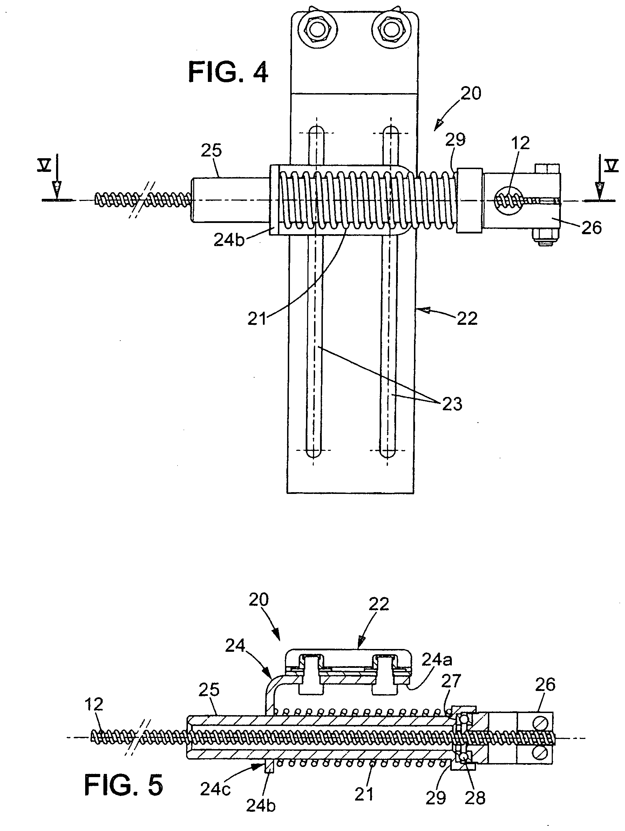

L'extrémité libre de chacun des arbres 12 est reliée à un système 20 de maintien en tension. Ce système 20 de maintien en tension, représenté figures 4 et 5, peut former une sorte de module, lequel module est installé à l'extrémité libre de l'arbre 12 flexible. Ce système de tension comprend un organe élastique en forme de ressort 21 précontraint de manière à présenter, en l'absence d'efforts exercés sur l'arbre 12, une course de compression et une course d'élongation.

Le système 20 de maintien en tension comporte également une plaque 22 de fixation qui est solidaire du châssis 5 du convoyeur et qui comporte deux fentes 23 verticales de positionnement.

Le système 20 de maintien en tension comporte également une butée 24 en forme d'équerre, montée coulissante sur les fentes 23 de positionnement avec une première partie 24a longitudinale. Une partie 24b transversale de la butée 24, comportant un perçage 24c, s'étend transversalement à la direction longitudinale de l'arbre 12.

Le système 20 de maintien en tension comporte également un tube 25 de guidage centré sur l'arbre 12 et positionné au travers du perçage 24c ; ce tube 25 est susceptible de coulisser longitudinalement dans ledit perçage 24c. Le tube 25 de guidage est traversé par l'extrémité libre de l'arbre 12, sur laquelle est fixé un embout 26.

Le tube 25 de guidage comporte à son extrémité située du côté de l'embout 26, un épaulement 27 interne constituant un palier pour une butée 28 à billes. L'embout 26 vient se positionner contre la butée 28 à billes.

Le tube 25 de guidage comporte également à son extrémité située du côté de l'embout 26, un épaulement 29 externe. Le ressort 21 vient en appui contre l'épaulement 29 avec l'une de ses extrémités et contre la partie 24b transversale avec son autre extrémité.

La longueur de l'arbre 12 et, plus précisément, la position de l'embout 26 est choisie pour contraindre le ressort 21, en l'absence d'efforts provenant du moteur 18. La précontrainte exercée sur le ressort 21 permet cependant à ce dernier de disposer encore d'une course en compression et d'une course en élongation de manière à absorber des efforts différents exercés sur l'arbre 12.

L'aménagement représenté figure 1 peut se retrouver également, dans son principe, sur d'autres types de convoyeurs multi-couloirs.

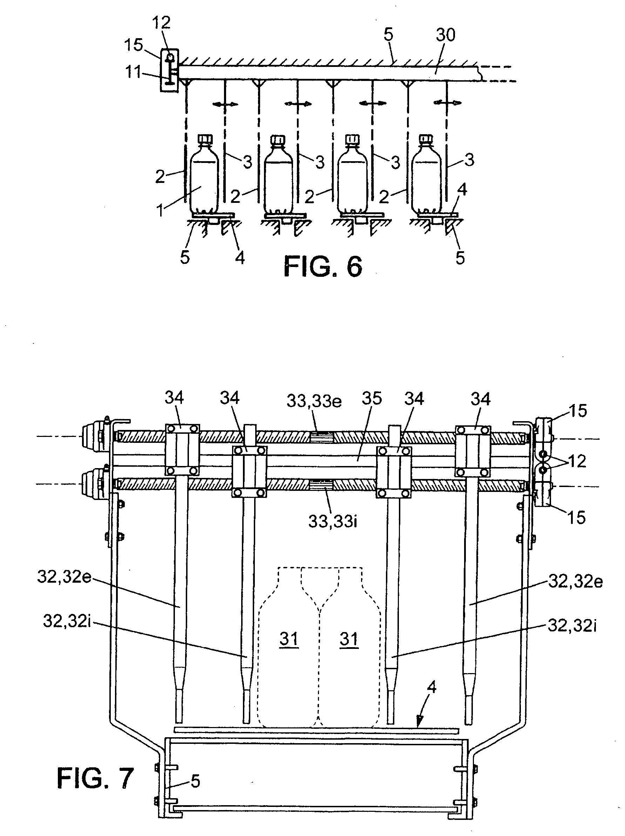

La figure 6 montre un autre type de convoyeur où les parois fixes et mobiles sont suspendues au-dessus du tapis du convoyeur. La structure qui porte les parois 3 mobiles, est logée et guidée au moyen d'un système de glissières qui est intégré dans une traverse 30, en forme de portique, lequel portique est solidaire du châssis 5 du convoyeur. Dans cette version, l'ensemble du dispositif de réglage se situe au-dessus de la surface de convoyage des bouteilles 1.

La figure 7 est une vue en coupe transversale d'un détail d'un autre type de convoyeur pour des objets du genre packs 31, lequel convoyeur est équipé du dispositif de réglage conforme à l'invention.

Ce convoyeur de packs 31 comporte : - des organes de guidage en forme de parois 32 qui sont disposées au-dessus et au voisinage du tapis 4 de convoyage pour guider lesdits packs 31 et, - il comporte des moyens de réglage de l'écartement desdites parois 32 de guidage qui sont toutes mobiles transversalement.

Dans cet exemple de réalisation, il y a en fait deux jeux de parois 32 qui sont réglables indépendamment l'un de l'autre au moyen de deux dispositifs de réglage ; chaque jeu de parois 32 est, comme précédemment, manoeuvré par une vis 33, du type à deux filetages inversés et ces filetages coopèrent chacun avec un écrou 34, lequel écrou 34 fait office de chariot pour porter la paroi correspondante et il est d'ailleurs guidé sur une traverse 35 qui est solidaire du châssis 5 du convoyeur.

Ces dispositifs de réglage sont superposés et ils fonctionnent de la même façon. Le dispositif de réglage disposé en partie haute est, par exemple, utilisé pour réaliser le réglage des parois 32e situées en bordure et l'autre dispositif de réglage, situé en dessous, est utilisé pour réaliser le réglage des parois 32i situées dans la partie centrale du convoyeur.

Le boîtier 15 de transmission de chaque dispositif de réglage fait office de premier niveau de réduction avec sa roue dentée qui est entraînée en rotation par l'arbre 12 flexible. Cette roue dentée, logée dans le boîtier 15, entraîne en rotation la vis 33e qui présente, sur sa longueur, deux portions de filetage à pas inversés pour rapprocher ou écarter, en même temps, les parois 32e ; les parois 32i sont manoeuvrées, de la même façon, par la vis 33i qui est identique à ladite vis 33e.

Dans cet exemple de réalisation de la figure 7, on peut commander la position de quatre parois 32 de guidage au voisinage du tapis 4 de convoyage et, par conséquent, dimensionner trois couloirs de convoyage. Le couloir central peut, par exemple, présenter une première largeur et les couloirs s'étendant de part et d'autre dudit couloir central peuvent présenter une seconde largeur identique ou différente de celle de ce dernier.

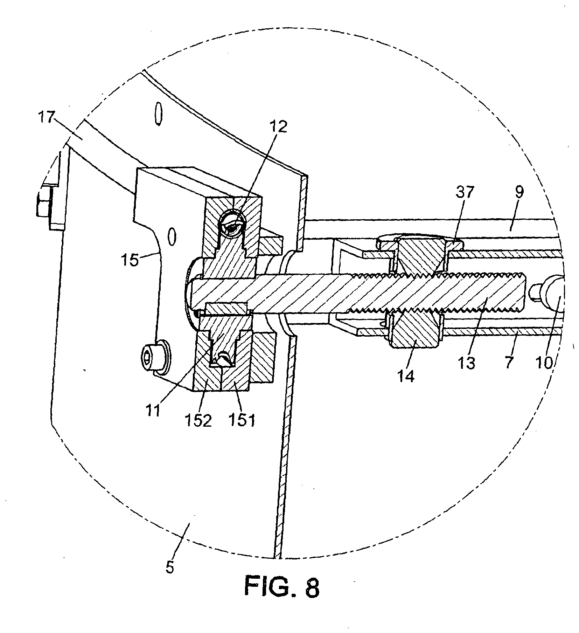

La figure 8 est une vue partielle en coupe montrant une version évoluée du dispositif de réglage représenté figure 2, lequel dispositif est représenté monté sur un convoyeur courbe qui comporte également des parois 2 fixes et des parois 3 mobiles. Il peut également convenir pour les autres types de convoyeurs présentés notamment dans la présente demande.

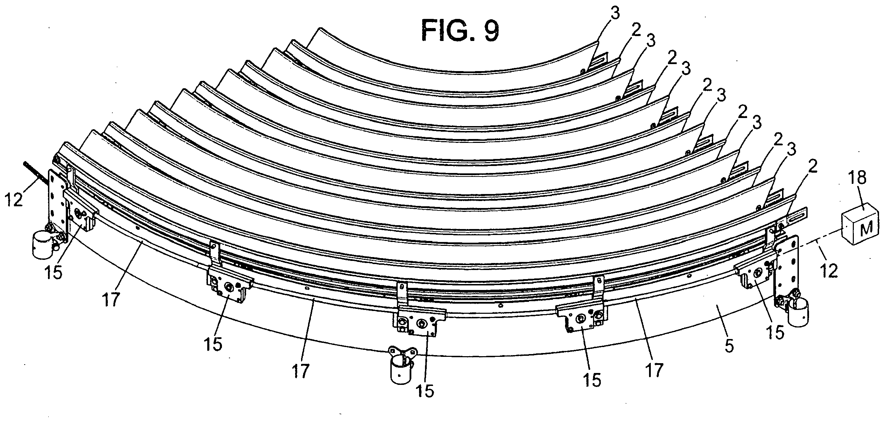

Cette figure 8, en liaison avec la figure 9, montre l'arbre 12 flexible du dispositif de réglage qui s'étend sur le côté courbe externe du convoyeur, au fil des boîtiers 15. Ce dispositif de réglage comprend, comme précédemment, un mécanisme de manoeuvre de la structure 7 qui est constitué d'un écrou 14 du type flottant, solidaire de ladite structure 7 à section en U, et une vis 13 sans fin. La vis 13 sans fin est liée à la roue 11 par tout moyen approprié, laquelle roue 11 est associée à l'arbre 12 flexible en forme de vis sans fin. En fait, pour limiter au maximum les pertes par frottement dans le dispositif de réglage, les guidages inutiles, notamment celui de la vis 13 de manoeuvre, sont réduits à leur plus simple expression ; ladite vis 13 est solidarisée à la roue 11 et elle impose pratiquement sa position à l'écrou 14 qui bénéficie d'un montage du type flottant sur la structure 7 ; il est mobile, par rapport à ladite structure 7, dans un plan qui est perpendiculaire à l'axe de ladite vis 13, guidé dans une douille 37 qui est solidaire de ladite structure 7.

La structure 7 porte les différentes parois 3 mobiles alors que la traverse 9, sur laquelle est guidée ladite structure 7, porte les parois fixes, comme détaillé auparavant figure 1 notamment. De même, la structure 7 est guidée par rapport à la traverse 9 au moyen de galets 10.

De préférence, afin de ne pas endommager l'arbre 12 flexible, on prévoit de le faire passer dans un fourreau 17 qui s'étend entre deux boîtiers 15. De même, afin de ne pas endommager la roue 11 dentée, on prévoit de l'enfermer dans un boîtier 15 qui est réalisé en matériau thermoplastique approprié du genre acétal, lequel matériau est également utilisé pour les fourreaux 17.

Le boîtier 15 est fixé sur le châssis 5 et il est conçu pour pouvoir être ouvert et refermé aisément, pour faciliter la maintenance des pièces qu'il enferme.

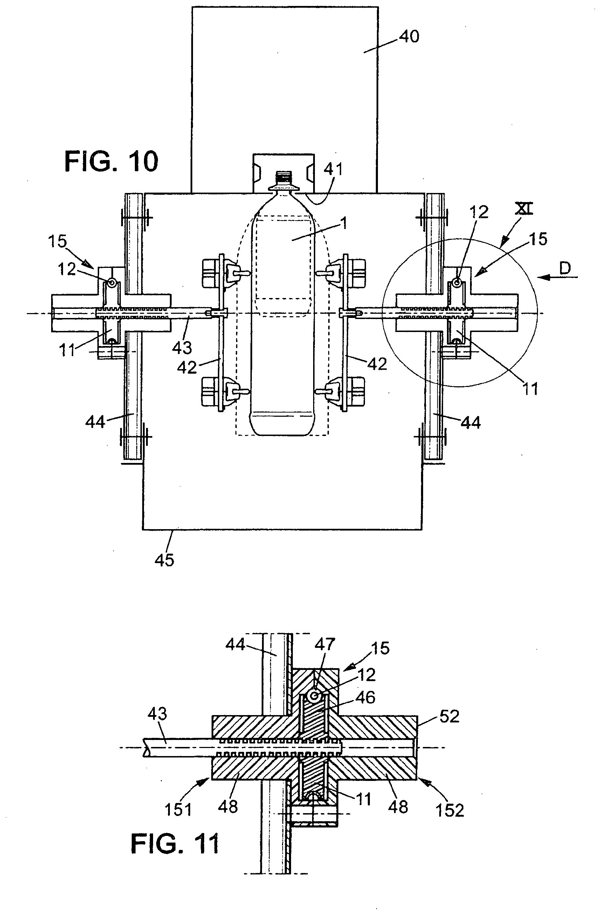

La figure 10 est une vue en coupe transversale d'un convoyeur à air comportant un dispositif de réglage conforme à l'invention. Ce convoyeur comprend une chambre 40 de soufflage et un système 41 de guidage sous col pour des bouteilles 1.

Les boîtiers 15 de transmission coopèrent avec l'arbre 12 flexible de manière à transmettre un mouvement de déplacement à des rails 42, ou parois, de guidage dont la course de déplacement est déterminée par la rotation et plus précisément par le nombre de tours de rotation de l'arbre 12 flexible. Ainsi, par exemple, le déplacement du rail 42 de guidage est de 4 mm pour 40 tours environ de l'arbre 12 flexible. Le déplacement du rail 42 s'effectue par l'intermédiaire de la vis 43 sans fin qui coopère avec la roue 11 dentée, laquelle vis 43 fait office de support pour le rail 42 et elle est guidée dans le corps du boîtier, comme détaillé plus loin, figure 11.

Les boîtiers 15 de transmission sont montés en vis-à-vis sur des descentes 44 de pont. Ces dernières sont reliées entre elles par une tige 45 de liaison pour garantir un positionnement stable des rails 42 de guidage.

Des couples de boîtiers 15 de transmission sont distribués, par exemple, à raison de un par mètre, sur toute la longueur du convoyeur.

La figure 11 montre, d'une façon plus détaillée et en coupe transversale, un boîtier 15 installé sur une des descentes 44 de pont du convoyeur à air comprimé, lequel boîtier 15 contient le couple réducteur constitué de l'arbre 12 flexible et de la roue 11 dentée, laquelle roue 11 dentée fait office d'écrou de manoeuvre pour la vis 43 sans fin qui est solidaire du rail 42 servant de guide-corps.

Le boîtier 15 de transmission est constitué de deux demi-coques 151, 152, qui sont, de préférence, identiques. Ces demi-coques renferment la roue 11 dentée, à dentelure périphérique, montée avec jeu mécanique dans le logement 46. Les diamètres du logement 46 et de la roue 11 sont choisis pour positionner une portion de la périphérie de ladite roue 11 dans le passage 47 calibré, de manière à engrener avec le filet de l'arbre 12 flexible.

La dentelure de la roue 11 est aménagée en creux sur toute la circonférence, avec une section semi-circulaire et l'arbre 12 flexible est guidé dans le passage 47 calibré des demi-coques 151, 152 sur une longueur qui est de l'ordre de la moitié de ladite circonférence de ladite roue 11.

La roue 11 fait office d'écrou pour la vis 43, dont le filetage s'étend sur une partie de la longueur de la tige. La vis 43 fait également office d'axe pour la roue 11 ; elle est immobilisée en rotation par le rail 42 de guidage et elle est mobile en translation sous l'effet de la rotation de la roue 11, elle-même entraînée en rotation par l'arbre 12 flexible. Le sous-ensemble comprenant la roue 11 et la vis 43 est donc monté avec jeu dans le logement 46. La coopération de ce sous-ensemble avec l'arbre 12 flexible permet alors d'optimiser son positionnement dans le logement 46.

Le boîtier 15 de transmission comporte avantageusement des saillies 48 cylindriques pour recouvrir le filetage de la vis 43 et ceci sur toute la course de translation de ladite vis 43. On évite ainsi un encrassement du filetage.

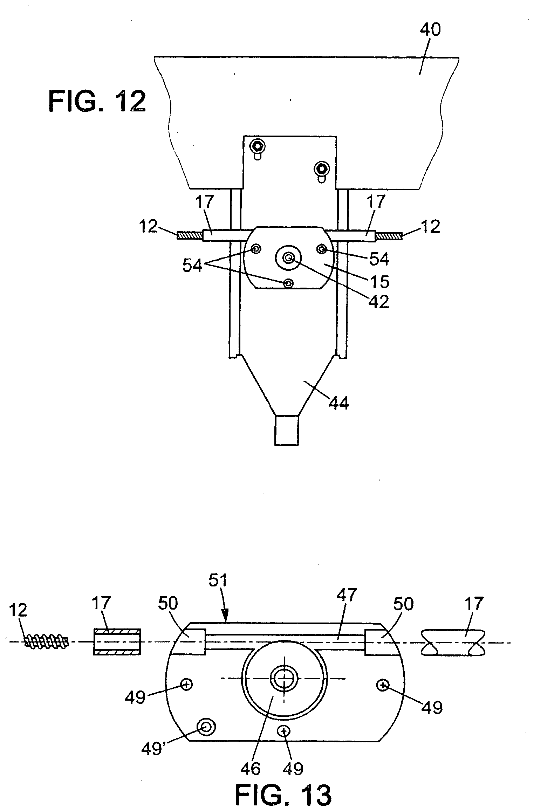

Les boîtiers 15 de transmission sont destinés à être fixées sur les descentes 44 de pont. Ces boîtiers 15 de transmission sont fixés sur les descentes 44 de pont par exemple avec trois vis 49, comme montré figure 12.

La figure 13 montre la face interne d'une demi-coque avec, représentés partiellement, l'arbre 12 flexible et les fourreaux 17 qui habillent, de chaque côté du boîtier 15, les tronçons de l'arbre 12 flexible. Les boitiers 15 de transmission délimitent à cet effet, comme représenté figure 12, des ouvertures 50 dans lesquelles seront engagés les fourreaux 17.

La demi-coque 151 présente une partie du logement 46 ainsi qu'une partie du passage 47 calibré. La demi-coque 151 comporte également des perçages de fixation qui seront traversés par les vis 49 lors de son assemblage final, avec l'autre demi-coque 152, sur une descente 44 de pont. La demi-coque 151 comporte aussi un perçage 49' pour le passage d'une vis à tête fraisée qui permet son assemblage préalable sur la descente 44 de pont pour la mise en place de la roue 11 dentée et de l'arbre 12 flexible, comme expliqué plus loin avec la description du procédé de montage du dispositif de réglage.

Le boîtier 15 de transmission renferme la roue 11, à dentelure périphérique, montée avec jeu mécanique dans le logement 46. Les diamètres du logement 46 et de la roue 11 sont choisis pour positionner une portion de la périphérie de ladite roue 11 dans le passage 47 calibré, de manière à engrener avec le filet de l'arbre 12 flexible.

La figure 12 est une vue de côté de la figure 10, montrant, notamment, l'implantation d'un boîtier 15 du dispositif de réglage selon l'invention, sur une descente 44 de pont du convoyeur à air comprimé.

Dans une application comme celle décrite en relation avec la figure 12 ci-dessus, le procédé de montage sur un convoyeur à air comprimé d'un dispositif de réglage comportant plusieurs boîtiers 15 de transmission consiste donc :
- à fixer une demi-coque 151 de chaque boîtier 15 de transmission sur le convoyeur, plus précisément sur une descente 44 de pont,
- à disposer dans chaque demi-coque 151 une roue 11 et à engager ladite roue 11 avec une extrémité de la vis 43 sans fin correspondante, l'autre extrémité de ladite vis 43 étant fixée et immobilisée sur un rail 42 faisant office de guide-corps,
- à dimensionner les fourreaux 17 et à les enfiler sur le tronçon d'arbre 12 flexible,
- à positionner et immobiliser les fourreaux 17 sur les premières demi-coques 151 correspondantes, et
- à installer l'arbre 12 flexible dans les parties des passages 47 calibrés des premières demi-coques 151 et à relier l'arbre 12 flexible au moteur 18 et au système 20 de maintien en tension,
- à positionner et immobiliser les fourreaux 17 sur les premières demi-coques 151 correspondantes,
- à refermer chaque boîtier 15 de transmission en fixant la seconde demi-coque 152 sur la première demi-coque 151 déjà en place,
- à positionner la vis 43 de manoeuvre dans une position préétablie, au moyen d'une butée ou, par exemple, d'une face 52 de référence comme celle qui correspond à l'extrémité de la saillie 48 de la demi-coque 152 située à l'extérieur du convoyeur.

Dans une application comme celle qui est décrite en relation avec la figure 3 ou la figure 9, ainsi que dans les applications correspondant aux figures 6 et 7, le procédé de montage sur un convoyeur d'un dispositif de réglage comportant plusieurs boîtiers 15 de transmission consiste donc :
- à fixer une demi-coque 151 de chaque boîtier 15 de transmission sur le châssis du convoyeur,
- à disposer, dans chaque demi-coque 151 une roue 11 et à solidariser ladite roue 11 avec une extrémité de l'arbre 12 flexible correspondant,
- à dimensionner les fourreaux 17 et à les enfiler sur chaque tronçon d'arbre 12 flexible,
- à installer l'arbre 12 flexible dans les parties des passages 47 calibrés des premières demi-coques 151 et relier ledit arbre 12 flexible au moteur 18 et au système 20 de maintien en tension,
- à refermer chaque boîtier 15 de transmission en fixant la seconde demi-coque 152 sur la première demi-coque 151 déjà en place.

L'invention concerne également un système de montage d'une vis sans fin en forme d'arbre 12 flexible de grande longueur, de l'ordre de 10 mètres au moins, entraînée, à l'une de ses extrémités, par un organe moteur 18 pour manoeuvrer des roues 11 dentées qui actionnent des parois ou rails de couloirs de convoyeurs, par exemple.

Le système de montage comprend, à l'extrémité libre de l'arbre 12, un module de tension ou de maintien en tension capable d'absorber les efforts de réaction dans ledit arbre 12 afin d'éliminer, à tout le moins de réduire, les dérives angulaires au niveau de l'entraînement desdites roues 11 d'actionnement, lequel module comprend un système de tension qui est constitué d'une butée 28 du type à billes interposée entre un embout 26 solidaire de ladite extrémité libre de l'arbre 12 et un épaulement 27. Cet épaulement 27 est aménagé sur un tube 25 qui est centré sur l'arbre 12, lequel tube 25 est mobile par rapport au châssis 5 du convoyeur et il est maintenu en position au moyen d'un organe élastique du genre ressort 21, lequel ressort est précontraint de manière à présenter, en l'absence d'efforts exercés sur l'arbre 12 flexible, une course de compression et une course d'élongation.

Un tel système de montage permet notamment d'atténuer les vibrations de l'arbre 12 flexible lors de sa mise en rotation.

## Revendications

1. Dispositif de réglage de largeur pour couloir(s) de convoyeur, comportant un mécanisme à grande démultiplication solidaire d'un châssis (5) dudit convoyeur, lequel mécanisme est disposé entre un arbre (12) de commande et une ou des parois dudit couloir et il comprend :
- un couple réducteur à fonctionnement irréversible constitué - dudit arbre (12) de commande et - d'une roue (11) dentée, le dispositif étant **caractérisé en ce que** ledit arbre (12) de commande est en forme de vis sans fin et **en ce que** le dispositif comprend de plus :
- un système de manoeuvre de l'une au moins des parois dudit couloir, constitué d'une vis (13, 43) sans fin et d'un écrou, laquelle vis sans fin étant mobile ou fixe par rapport à ladite roue (11) dentée, et
- **en ce que** le dispositif de réglage comporte un arbre (12) flexible de grande longueur et au moins un système (20) de maintien en tension dudit arbre (12) flexible, lequel système (20) de maintien est disposé entre une extrémité dudit arbre (12) et le châssis (5) du convoyeur, pour absorber les efforts de traction et de poussée exercés sur ledit arbre (12) selon le sens de rotation.

2. Dispositif de réglage de largeur pour couloir(s) de convoyeur, selon la revendication 1, **caractérisé en ce que** le couple réducteur constitué - de l'arbre (12) de commande, en forme de vis sans fin, et - de la roue (11) dentée, fonctionne avec un rapport de l'ordre 1/40.

3. Dispositif de réglage de largeur pour couloir(s) de convoyeur, selon la revendication 1, **caractérisé en ce que** l'arbre (12) du couple réducteur comprend une âme centrale dont le diamètre est de l'ordre de 4 mm sur laquelle est enroulé un fil métallique du genre corde à piano dont le diamètre est de l'ordre de 2 mm, ledit fil étant immobilisé sur ladite âme par enroulement serré avec un pas qui est de l'ordre de 4 mm.

4. Dispositif de réglage de largeur pour couloir(s) de convoyeur, selon la revendication 41, **caractérisé en ce que** le système (20) de maintien en tension comprend une butée (28) du type butée à billes interposée entre un embout (26) solidaire d'une extrémité de l'arbre (12) flexible et un épaulement (27), lequel épaulement (27) est aménagé sur un tube (25) qui est mobile par rapport au châssis (5) du convoyeur et qui est maintenu en position au moyen d'un organe élastique du genre ressort (21) précontraint, de manière à présenter, en l'absence d'efforts exercés sur ledit arbre (12) flexible, une course de compression et une course d'élongation.

5. Dispositif de réglage de largeur pour couloir(s) de convoyeur, selon l'une des revendications 1 à 4, **caractérisé en ce que** l'arbre (12) de commande flexible est manoeuvré par un organe moteur (18) et **en ce qu'**il comprend des moyens de commande pour enregistrer une consigne de réglage de la largeur du ou des couloirs, et pour actionner ledit moteur (18) en fonction de ladite consigne de réglage.

6. Dispositif de réglage de largeur pour couloir(s) de convoyeur, selon la revendication 1, **caractérisé en ce qu'**un moteur (18) d'actionnement du mécanisme de manoeuvre est positionné à mi-longueur de l'arbre (12) flexible, ou entre deux arbres (12) flexibles de grande longueur l'extrémité libre de chacun du ou des arbres flexibles étant fixée au système (20) de maintien en tension.

7. Dispositif de réglage de largeur pour couloir(s) de convoyeur, selon la revendication 1, **caractérisé en ce que** le couple constitué de l'arbre (12) flexible, et de la roue (11) dentée coopère dans un boîtier (15) de transmission et, entre deux boîtiers (15) consécutifs, ledit arbre (12) flexible est logé dans un fourreau (17) de guidage et de protection, ledit fourreau (17) présentant des extrémités engagées dans et/ou fixées sur lesdits boîtiers (15) de transmission correspondants.

8. Dispositif de réglage de largeur pour couloir(s) de convoyeur, selon la revendication 7, **caractérisé en ce que** le boîtier (15) de transmission est constitué de deux demi-coques (151, 152) réalisées en matériau du type acétal, lequel boîtier (15) comporte :
- ces deux demi-coques (151, 152) usinées et destinées à être fixées sur le châssis (5) du convoyeur,
- un logement (46) sensiblement cylindrique délimité par lesdites demi-coques (151, 152) lorsqu'elles sont assemblées, lequel logement (46) est occupé par la roue (11) dentée,
- un passage (47) calibré pour l'arbre (12) flexible, lequel passage (47) est aménagé dans chacune desdites demi-coques (151, 152), ledit passage (47) calibré étant positionné orthogonalement par rapport à l'axe dudit logement (46) et de manière à tangenter ledit logement (46) pour permettre le fonctionnement du couple arbre (12) flexible et roue (11) dentée, et, selon le cas,
- lesdites demi-coques (151, 152) comportent des saillies (48) cylindriques pour guider et recouvrir le filetage de la vis (43) de manoeuvre de la ou des rails, ou parois, du ou des couloirs.

9. Dispositif de réglage de largeur pour couloir(s) de convoyeur, selon la revendication 1, ledit dispositif comportant le module de tension (20) associé audit arbre (12) flexible de grande longueur, l'arbre (12) étant en forme de vis sans fin, de l'ordre de 10 mètres au moins, ledit arbre (12) flexible étant entraîné, à l'une de ses extrémités, par un organe moteur (18) pour manoeuvrer des roues (11) dentées et étant monté sur le châssis (5), lequel module de tension (20) est aménagé à l'extrémité libre dudit arbre (12) flexible et il comprend un système de maintien en tension constitué d'une butée (28) du type à billes interposée entre un embout (26) solidaire de ladite extrémité libre dudit arbre (12) flexible et un épaulement (27), lequel épaulement (27) est aménagé sur un tube (25) qui est centré sur ledit arbre (12) flexible, et qui est mobile par rapport au châssis (5) tout en étant maintenu en position au moyen d'un organe élastique du genre ressort (21) précontraint, de manière à présenter, en l'absence d'efforts exercés sur ledit arbre (12) flexible, une course de compression et une course d'élongation.

10. Procédé de montage du dispositif de réglage de largeur pour couloir(s), selon la revendication 8, sur un convoyeur unifilaire ou multi-couloirs, lequel procédé consiste
- à fixer l'une des demi-coques (151, 152) de chaque boîtier (15) de transmission sur le châssis (5) dudit convoyeur,
- à dimensionner les fourreaux (17) qui s'étendent entre deux boîtiers (15) et à les enfiler sur la portion correspondante de l'arbre (12) flexible,
- à disposer dans chaque demi-coque (151) le couple réducteur constitué de l'arbre (12) flexible et de la roue (11) dentée avec les fourreaux (17) correspondants,
- à refermer chaque boîtier (15) de transmission en fixant la demi-coque (152) restante sur la demi-coque (151) déjà en place,
- à relier l'arbre (12) flexible au moteur (18) et, selon le cas, à un système (20) de maintien en tension.

11. Procédé selon la revendication 10, **caractérisé en ce que**, dans le cas d'un dispositif de réglage dont la roue (11) dentée fait office d'écrou pour la vis (43) de manoeuvre du rail, ou paroi correspondante, il consiste aussi, après avoir disposé le couple réducteur dans la demi-coque (151), à positionner ladite vis (43) de manœuvre et de l'installer dans une position préétablie, au moyen d'une butée ou, par exemple, de la face (52) située à l'extrémité de la saillie (48) du demi-boîtier externe (152) et qui peut servir de surface de référence.

## Patentansprüche

1. Breiteneinstellungsvorrichtung für Fördergänge, die einen Mechanismus mit hoher Untersetzung aufweist, der fest mit einem Gehäuse (5) des Förderers verbunden ist, wobei der Mechanismus zwischen einer Antriebswelle (12) und einer Wand oder Wänden des Gangs angeordnet ist und Folgendes umfasst:
- einen Untersetzungssatz mit unumkehrbarer Funktion, der gebildet ist aus - der Antriebswelle (12) und - einem Zahnrad (11),
wobei die Vorrichtung **dadurch gekennzeichnet ist, dass** die Antriebswelle (12) die Form einer Schnecke aufweist und dadurch, dass die Vorrichtung ferner Folgendes umfasst:
- ein Bedienungssystem für mindestens eine der Wände des Gangs, das aus einer Schnecke (13, 43) und aus einer Mutter gebildet ist, wobei die Schnecke bezogen auf das Zahnrad (11) beweglich oder fest ist und wobei
- die Breiteneinstellungsvorrichtung für Fördergänge umfasst eine langen biegsame Welle (12) und mindestens ein System (20) zum Beibehalten der Spannung der biegsamen Welle (12) aufweist, wobei das Beibehaltungssystem (20) zwischen einem Ende der Welle (12) und dem Gehäuse (5) des Förderers angeordnet ist, um die Zug- und Druckbeanspruchungen aufzunehmen, die auf die Welle (12) in Drehrichtung ausgeübt werden.

2. Breiteneinstellungsvorrichtung für Fördergänge nach Anspruch 1, **dadurch gekennzeichnet, dass** der Untersetzungssatz, der gebildet ist aus - der Antriebswelle (12) in Form einer Schnecke und - dem Zahnrad (11) mit einem Verhältnis in der Größenordnung 1/40 arbeitet.

3. Breiteneinstellungsvorrichtung für Fördergänge nach Anspruch 1, **dadurch gekennzeichnet, dass** der Welle (12) des Untersetzungssatzes eine mittige Seele umfasst, deren Durchmesser in der Größenordnung von 4 mm liegt, auf die ein Stahlsaiten-Metalldraht aufgewickelt ist, dessen Durchmesser in der Größenordnung von 2 mm liegt, wobei der Draht durch gedrückte Wicklung auf der Seele fixiert ist, indem er mit einer Steigung in der Größenordnung von 4 mm fest aufgewickelt ist.

4. Breiteneinstellungsvorrichtung für Fördergänge nach Anspruch 1, **dadurch gekennzeichnet, dass** das Spannungsbeibehaltungssystem (20) ein Druckkugellager-Längslager (28) umfasst, das zwischen einem Endstück (26), das fest mit einem Ende der biegsamen Welle (12) verbunden ist, und einem Absatz (27) angeordnet ist, wobei der Absatz (27) an einer Röhre (25) vorgesehen ist, die bezogen auf das Gehäuse (5) des Förderers beweglich ist und die mithilfe von einem elastischen Organ vom Typ vorgespannte Feder (21) an ihrer Position gehalten ist, sodass sie bei Fehlen von auf die biegsame Welle (12) ausgeübten Kräften einen Kompressionsweg und einen Dehnungsweg aufweist.

5. Breiteneinstellungsvorrichtung für Fördergänge nach einem der Ansprüche 1 bis 4, **dadurch gekennzeichnet, dass** die biegsam Antriebswelle (12) von einem Motorelement (18) betätigt wird und dass sie Steuermittel zum Speichern eines Einstellwerts für die Breite des Gangs oder der Gänge und zum Steuern des Motors (18) je nach dem Einstellwert umfasst.

6. Breiteneinstellungsvorrichtung für Fördergänge nach Anspruch 1, **dadurch gekennzeichnet, dass** ein Motor (18) zur Betätigung des Bedienungsmechanismus auf halber Länge der langen biegsam Welle (12) platziert, oder zwischen zwei langen biegsam Wellen (12), wobei das freie Ende von jeder biegsamen Welle oder der langen biegsamen Wellen an Spannungsbeibehaltungssystem (20) befestigt ist.

7. Breiteneinstellungsvorrichtung für Fördergänge nach Anspruch 1, **dadurch gekennzeichnet, dass** der Satz, der aus der biegsam Welle (12), und dem Zahnrad (11) gebildet ist, in einem Getriebegehäuse (15) zusammenwirkt, und die biegsame Welle (12) zwischen zwei aufeinanderfolgenden Gehäusen (15) in einem Führungs- und Schutzmantel (17) untergebracht ist, wobei der Mantel (17) Enden aufweist, die in den entsprechenden Getriebegehäusen (15) stecken und/oder daran befestigt sind.

8. Breiteneinstellungsvorrichtung für Fördergänge nach Anspruch 7, **dadurch gekennzeichnet, dass** das Getriebegehäuse (15) aus zwei Halbschalen (151, 152) gebildet ist, die aus einem Material vom Typ Acetal gefertigt sind, wobei das Gehäuse (15) Folgendes aufweist:
- diese beiden maschinell bearbeiteten Halbschalen (151, 152), die am Gehäuse (5) des Förderers befestigt werden sollen,
- eine im Wesentlichen zylindrische Aufnahme (46), die von den Halbschalen (151, 152) begrenzt ist, wenn sie zusammengesetzt sind, wobei sich in der Aufnahme (46) das Zahnrad (11) befindet,
- einen genau an die biegsame Welle (12) angepassten Durchgang (47), wobei der Durchgang (47) in jeder der Halbschalen (151, 152) angeordnet ist, wobei der genau angepasste Durchgang (47) orthogonal bezogen auf die Achse der Aufnahme (46) und so platziert ist, dans er die Aufnahme (46) berührt, um die Funktion des Satzes aus biegsamer Welle (12) und Zahnrad (11) zu ermöglichen, und wobei, je nach Fall,
- die Halbschalen (151, 152) zylindrische Ansätze (48) aufweisen, um das Gewinde der Schraube (43) zum Bedienen der Schiene oder der Schienen, oder Wände, des Gangs oder der Gänge zu führen und abzudecken.

9. Breiteneinstellungsvorrichtung für Fördergänge nach Anspruch 1, wobei die Vorrichtung die Spannungsmodul (20) aufweist, das der langen biegsam Welle (12) zugeheirig ist, und die Form einer Schnecke in der Größenordnung von mindestens 10 Metern aufweist, wobei die biegsame Welle (12) an einem ihrer Enden von einem Motorelement (18) zum Bedienen der Zahnräder (11) angetrieben ist, das an dem Gehäuse (5) angebracht ist, wobei das Spannungsmodul (20) am freien Ende der biegsamen Welle (12) angeordnet ist und es ein Spannungsbeibehaltungssystem umfasst, das aus einem Druckkugellager (28) gebildet ist, das zwischen einem Endstück (26), das fest mit dem freien Ende der biegsamen Welle (12) verbunden ist, und einem Absatz (27) angeordnet ist, wobei der Absatz (27) an einer Röhre (25) angeordnet ist, die auf der biegsamen Welle (12) mittig ausgerichtet ist und die bezogen auf das Gehäuse (5) beweglich ist, während sie mithilfe von einem elastischen Organ vom Typ vorgespannte Feder (21) an ihrer Position gehalten ist, sodass sie bei Fehlen von auf die biegsame Welle (12) ausgeübten Kräften einen Kompressionsweg und einen Dehnungsweg aufweist.

10. Verfahren zur Montage der Breiteneinstellungsvorrichtung für Fördergänge nach Anspruch 8 an einem Förderer mit einem Gang oder mehreren Gängen, wobei das Verfahren aus Folgendem besteht:
- Befestigen von einer der Halbschalen (151, 152) jedes Getriebegehäuses (15) an dem Gehäuse (5) des Förderers,
- Auslegen der Mäntel (17), die zwischen zwei Gehäusen (15) verlaufen, und Ziehen derselben über den entsprechenden Abschnitt der biegsamen Welle (12),
- Anordnen des Untersetzungssatzes, der aus der biegsamen Welle (12) und dem Zahnrad (11) gebildet ist, mit den entsprechenden Mänteln (17) in jeder Halbschale (151),
- Schließen jedes Getriebegehäuses (15) durch Befestigen der verbleibenden Halbschale (152) an der bereits an Ort und Stelle befindlichen Halbschale (151),
- Verbinden der beweglichen Welle (12) mit dem Motor (18) und, je nach Fall, mit einem Spannungsbeibehaltungssystem (20).

11. Verfahren nach Anspruch 10, **dadurch gekennzeichnet, dass** es im Fall einer Einstellungsvorrichtung, deren Zahnrad (11) als Mutter für die Schraube (43) zum Bedienen der entsprechenden Schiene oder Wand dient, auch darin besteht, die Bedienungsschraube (43), nachdem der Untersetzungssatz in der Halbschale (151) angeordnet wurde, in einer vorher festgelegten Position mithilfe von einem Anschlag oder beispielsweise der Seite (52), die sich am Ende des Ansatzes (48) der äußeren Halbschale (152) befindet und als Bezugsfläche dienen kann, zu platzieren und anzubringen.

## Claims

1. A width-adjusting device for conveyor corridor(s), comprising a mechanism with high gear reduction integrally attached to a chassis (5) of said conveyor, said mechanism being arranged between a control shaft (12) and a wall or walls of said corridor and comprising:
- a final drive offering irreversible operation, consisting of: -said control shaft (12) and - a toothed wheel 11),
the device being **characterized in that** said control shaft (12) is in the form of an endless screw and the device further comprises:
- a system for maneuvering at least one of the walls of said corridor, consisting of an endless screw (13, 43) and a nut, said endless screw being mobile or fixed relative to said toothed wheel (11) and **characterized in that**
- the width-adjusting device comprises a flexible shaft (12) which is very long, and at least one system (20) for maintaining the tension of said flexible shaft (12), said tensioning system (20) being arranged between an end of said shaft (12) and the chassis (5) of the conveyor, to absorb the pulling and pushing forces exerted on said shaft (12) according to the direction of rotation.

2. The width-adjusting device for conveyor corridor(s), according to claim 1, **characterized in that** the final drive consisting of - the control shaft (12) in the form of an endless screw and - the toothed wheel (11), operates with a ratio on the order of 1/40.

3. The width-adjusting device for conveyor corridor(s), according to claim 1, **characterized in that** the shaft (12) of the final drive comprises a central core having a diameter of approximately 4 mm onto which a metal wire such as piano wire having a diameter of approximately 2 mm is wound, said wire being held in place on said core by being tightly wound at a pitch of approximately 4 mm.

4. The width-adjusting device for conveyor corridor(s),according to claim 1, **characterized in that** the tensioning system (20) comprises a thrust bearing (28) placed between a ferrule (26) integrally attached to an end of the flexible shaft (12) and a shoulder (27), said shoulder (27) being on a tube (25) which is mobile relative to the chassis (5) of the conveyor and which is held in position by an elastic means such as a pre-tensioned spring (21), so as to provide a compression displacement and an elongation displacement when there are no forces exerted on said flexible shaft (12).

5. The width-adjusting device for conveyor corridor(s), according to anyone of claims 1-4, **characterized in that** the control shaft (12) is flexible and maneuvered by a motor means (18) and **in that** it comprises a control means for saving an adjustment set-point for the width of the corridor or corridors, and for actuating said motor (18) as a function of said adjustment set-point.

6. The width-adjusting device for conveyor corridor(s), according to claim 1, **characterized in that** a motor (18) for actuating the maneuvering mechanism is positioned at the midpoint of the flexible shaft (12) or between two flexible shafts (12) which are very long, the free end of the flexible shaft or each of the flexible shafts being attached to a tensioning system (20).

7. The width-adjusting device for conveyor corridor(s), according to claim 1, **characterized in that** the final drive consisting of the flexible shaft (12) and the toothed wheel (11) engages in a gearbox (15) and, between two consecutive gearboxes (15), said flexible shaft (12) is housed in a guiding protective sleeve (17), said sleeve (17) having ends fitted into and/or attached to said corresponding gearboxes (15).

8. The width-adjusting device for conveyor corridor(s) according to claim 7, **characterized in that** the gearbox (15) consists of two half-shells (151, 152) made of acetal material, said gearbox (15) comprising:
- there two half-shells (151, 152), machined and intended to be attached to the chassis (5) of the conveyor,
- a substantially cylindrical housing (46) delimited by said half-shells (151, 152) when they are assembled, said housing (46) being occupied by the toothed wheel (11),
- a passage (47) calibrated for the flexible shaft (12) and arranged in each of said half-shells (151, 152), said calibrated passage (47) being positioned orthogonally to the axis of said housing (46) and tangential to said housing (46) to allow the operation of the final drive consisting of the flexible shaft (12) and toothed wheel (11), and, depending of the case,
- said half-shells (151, 152) comprise cylindrical projections (48) to guide and cover the threading of the screw (43) for maneuvering the rail(s), or wall(s), of the corridor(s).

9. The width-adjusting device for conveyor corridor(s) according to claim 1, said device comprising the tension module (20) associated with said shaft (12), said flexible shaft (12) which is very long and being in the form of an endless screw, at least 10 meters or so in length, said flexible shaft (12) being driven, at one of its ends, by a motor means (18) in order to maneuver toothed wheels (11) and being mounted on the chassis (5), said tension module (20) is arranged at the free end of said flexible shaft (12) and it comprises a tensioning system consisting of a thrust bearing (28) placed between a ferrule (26) integrally attached to said free end of said flexible shaft (12) and a shoulder (27), said shoulder (27) is arranged on a tube (25) which is centered around said flexible shaft (12) and which is mobile relative to the chassis (5) while being held in position by an elastic means such as a pre-tensioned spring (21), in a manner that provides a compression displacement and an elongation displacement when there are no forces exerted on said flexible shaft (12).

10. A method for assembling the width-adjusting device for corridor(s), according to claim 8, onto a single row or multi-row conveyor, said method consisting of:
- attaching one of the half-shells (151, 152) of each 5 gearbox (15) onto the chassis (5) of said conveyor,
- sizing the sleeves (17) which extend between two gearboxes (15) and slipping them onto the corresponding portion of the flexible shaft (12),
- placing in each half-shell (151) the final drive consisting of the flexible shaft (12) and the toothed wheel (11) with the corresponding sleeves (17),
- closing each gearbox (15) by attaching the remaining half-shell (152) to the half-shell (151) already in place,
- connecting the flexible shaft (12) to the motor (18) and, depending on the case, to a tensioning system (20).

11. The method according to claim 10, **characterized in that**, in the case of an adjusting device in which the toothed wheel (11) acts as a nut for the screw (43) that maneuvers the corresponding rail, or wall, said method also consists of, after having placed the final drive in the half-shell (151), positioning and installing said maneuvering screw (43) in a pre-established position, by means of a stop or, for example, the face (52) at the end of the projection (48) from the external half-shell (152) and which can act as a reference surface.
